# EUROPEAN PATENT APPLICATION

(11) **EP 4 344 836 A1**
(43) Date of publication of application: **03.04.2024**
(21) Application number: 22199146.6
(22) Date of filing: 30.09.2022
(51) Int. Cl.: B25J 13/08

(54) **SLIP DETECTION FOR ROBOTIC GRIP**

(71) Applicant: Melexis Technologies SA, 2022 Bevaix (CH)
(72) Inventor: LE SIGNOR, Théo, 2022 Bevaix (CH); CLOSE, Gael, 2022 Bevaix (CH); DUPRÉ, Nicolas, 2022 Bevaix (CH)
(74) Representative: Bardehle Pagenberg Partnerschaft mbB Patentanwälte Rechtsanwälte

(57) **Abstract**

A system for determining a slip condition is provided. The system comprises at least one soft sensor element, wherein each of the at least one soft sensor elements comprises a sensor, a deformable element, wherein the deformable element is deformable by the force, and at least one element for reacting with the sensor to produce data indicative of the applied force by a deformation of the deformable element, wherein the deformable element extends at least partially between the sensor and the at least one element, and a processing means, wherein the processing means is configured to receive data from the at least one the soft sensor element, and determine whether a slip condition is met based on the received data. Further, a corresponding method is provided.

## Description

### TECHNICAL FIELD

The invention of the current application relates to monitoring for a sensor, in particular to monitoring the force in a force sensor applicable for robotic grippers in order to allow early detection of slip conditions.

### BACKGROUND

Sensors are used in various technical fields for gathering data that is used to analyze processes. One example of a sensor is a force sensor. A force sensor returns an electronic signal proportional to the mechanical force applied to the sensor. It can also be said that a force sensor converts the magnitude of applied force into a related electronic signal.

For example, using existing force sensors, the forces applied to workpieces during an automatized manufacturing process can be measured in real time to control the force exerted upon the workpiece. This makes force sensors particularly useful for in robotics. Here, force sensors are often used together with multi-axis robotic devices to move, position, hold, or sense objects. A multi-axis robotic device may, for example, include a robotic finger or a gripper. A robotic finger is like a humanoid finger but can be moveable in more directions. At the tip of the finger a force sensor can be applied, which allows to sense an object. A gripper is a mechatronic device, which exerts a force and a corresponding counterforce onto an object. Thereby, the force and the counterforce press the object against respective parts of the gripper such that the object and the respective gripper parts come into contact.

Besides precisely measuring the forces that act on the sensor in order to prevent the grip on an object from getting too tight, it is necessary to detect when the grip on an object may get too loose and the grip on the object may no longer be strong enough to secure the object, thereby exposing the object to the risk of slipping out of the gripper.

So far, this risk has not yet been addressed in the art in an effective way. For example, the gripper may grip the object way too tight, which secures the object, but exposes the object to an inappropriately high force that may damage the object. Other ways of registering a loose grip make use of small movements of the object, when the grip starts to loosen. This may, for example be done by additional optical or vision-based monitoring of the position of the object.

However, none of these options allows an early detection of an incipient slip or even a slipping object which would offer a proactive control of the gripper's grip. As such, the options known in the art are inefficient and may lead to failure of the gripper or damages.

Hence, there is a need for providing early detection of conditions that may lead to gripper failure, such as incipient slip.

### SUMMARY

The abovementioned need is addressed by a system according to the claims. The teaching of the invention may be used for a single sensor or a plurality of sensors. A plurality as used throughout this disclosure includes any number of two or more elements.

The system according to the present invention comprises at least one soft sensor element and a processing means. A soft sensor element according to the invention comprises a sensor, a deformable element, and at least one element for reacting with the sensor. The sensor may be an integrated circuit, a semiconductor die, a bare die, an unpackaged chip, or unpackaged integrated circuit. The sensor may be enclosed by the deformable element that may thereby provide passivation and encapsulation of the sensor, which avoids a need for using any lead frame or overmolding of the sensor. This allows the sensor to be flexible and to be formed in different shapes, which may be beneficial if a plurality of sensors is used. The element for reacting with the sensor may consist of a single element or a plurality of elements. The plurality of elements may comprise similarly shaped and/or similarly sized elements or differently shaped and sized elements.

The deformable element may be deformable and may extend at least partially between the sensor and the element. Thereby, the deformable element may also comprise pockets which form a kind of free space, into which no material of the deformable element extends. This free space may be filled with air, the surrounding media or an inert gas. The pockets still form part of the deformable element, such that the deformable element still extends between the element and the sensor, even if free space is between the element and the sensor. In such an arrangement, it can also be said that the element and/or the sensor may partially or fully extent into the free space of the deformable element. It can also be said that the element is partially embedded or attached to a wall of the formed pocket.

An element is deformable when it undergoes a change of shape and/or volume, when an external force acts onto the element. Preferably, deformable means that the deformable element undergoes an elastic deformation, i.e. it returns to its original shape and/or volume once the external force does no longer act upon the element. The deformable element may be an elastic element and may comprise an elastomer. In some cases, the deformable element may form pockets into which the deformable element may extend when it is deformed by the external force. For example, when an external force causes a substantial deformation of the deformable element, a portion of the deformable element may be displaced by the force and can extend into one of the pockets. Thereby, a pocket is a hollow space into which material of the deformable element can extend when being deformed. The formation of pockets has not only the advantage of allowing the deformable element to extend therein, but also can be used to give some stability to the deformable element.

Furthermore, the deformable element provides both the ability for the element to move to a certain extent and change its position when a force is applied, but also can encapsulate and possible electrically isolate the sensor, respectively the sensor chip, such that no packaging of the sensor chip is necessary, which makes it possible to have a very thin sensor, which is also in itself flexible. A further advantage is that if a plurality of sensors are used, the sensor chips of the different soft sensor elements can be arranged closer to one other as there is no package around each chip, which inherently increases the spatial resolution of the sensor array.

During operation, an object exerts a force onto the soft sensor element. Technically, the case that the soft sensor element is pressed against an object such that the soft sensor element exerts a force on the object is also encompassed, but in this disclosure it will not be distinguished between both cases since in both cases the force is amount wise the same, but is only directed in two opposing directions. Thereby, either the element for reacting with the sensor or the deformable element can come into contact with the object. The contact can be direct or indirect. The element for reacting with the sensor or the deformable element may as such be in direct or indirect contact with the object. In case of a direct contact, at least one surface of the element for reacting with the sensor or the deformable element touches at least one surface of the object. In case of an indirect contact, at least some other part is in between the contact surfaces. For the element for reacting with the sensor, this may be the deformable element itself, such that the element for reacting with the sensor is in indirect contact with the object, but the deformable element is in direct contact. In this case it can also be said that the element for reacting with the sensor is embedded in the deformable element. Thereby, the element for reacting with the sensor may be partially or fully embedded in the deformable element. In the latter case, all surfaces of the element for reacting with the sensor are in contact with the deformable element. It can also be said that the material of the deformable element surrounds the element for reacting with the sensor. The other way around, if the deformable element is in indirect contact with the object, the element for reacting with the sensor maybe in direct contact with the object. It is however also encompassed that other pieces are in direct contact with the object, whereas the element for reacting with the sensor as well as the deformable element are only in indirect contact with the object. For example, the element for reacting with the sensor may be embedded in a piece of plastic, which is contacting the deformable element. In another example, the piece of plastic is still contacting the deformable element and the object, but the element for reacting with the sensor is embedded in the deformable element, or the element is contacting the deformable element and the piece of plastic. In all three cases, the object will directly contact the piece of plastic but neither the element for reacting with the sensor nor the deformable element directly.

Since the deformable element extends at least partially between the sensor and the element or even surrounds the element, it holds the element in a particular position with respect to the sensor. This position may be defined as a first position of the element with respect to the sensor. It can also be said that the deformable element holds the element in a particular distance from the sensor. If the deformable element is deformed, the element as such performs a coaligned movement in the direction of deformation of the deformable element. If the deformation is a compression, then the distance of the element to the sensor is decreased, whereas if the deformation is a tension, then the distance is increased.

Deformation of the deformable element means that at least one spatial extension of the deformable element is changed in at least one respective spatial dimension. As such, the deformable element of the sensor arrangement may be soft in the sense that is it deformable. The deformability and in particular how much the deformable element can be deformed depends upon the material used for the deformable element. For example, the deformable element can be made of a flexible material. A flexible material is a material which returns to its initial shape once the external force is released. Hence, the deformable element may return to its initial shape if any external force is released. Therefore, the deformable element may also be called a flexible element or an elastic element. In another example, the deformable element may be an elastomer. An elastomer is typically made of monomers linked by weak intermolecular forces. Due to the weak intermolecular forces of the chemical elements of the elastomer, conformational changes of the compounds are possible without or with only partially breaking covalent bonds. This results in that an elastomer may be both viscous and elastic at the same time. Therefore, an elastomer may be deformed by an external force.

The deformation of the deformable element causes the element for reacting with the sensor to move to a second position different to the first position. If the deformable element is compressed, then the second position of the element is closer to the sensor than the first position of the element. If a tension force is applied, then the second position of the element is further away from the sensor than the first position. The change of position can be detected by the sensor of the sensor arrangement by reacting with the element. When reacting with the sensor, the element influences the measurement of the sensor. It could also be said that the element couples with the sensor through a physical effect, which is characteristic of the sensor and the element. This coupling of the element with the sensor depends on the position of the element with respect to the sensor.

If no external force is applied to the soft sensor element, the deformable element is not deformed and the element is located at the first position with respect to the sensor. Hence, a first signal can be measured by the sensor, which corresponds to a zero-force measurement. If a finite external force is applied to the element, the deformable element is deformed, and the element moves to the second position different from the first position. This second position of the element with respect to the sensor leads to a second signal of the sensor, which corresponds to the applied external force.

A soft sensor element may use a magnetic field for measuring changes in the position of the element for reacting with the sensor. The magnetic field may be a magnetic field caused by a permanent magnet (e.g. the element for reacting with the sensor may be a permanent magnet) or it may be a magnetic field that is induced by changes of an electrical field (e.g. the sensor may generate a magnetic field that couples with the element for reacting with the sensor (e.g. by generating of eddy currents in said element)).

The processing means is configured to receive data from the at least one soft sensor element and to determine whether a slip condition has been met based on the received data. A slip condition may encompass different undesired states of an object when it is, for example, gripped by a gripper. These states may be any state from among incipient slip, ongoing slip or loss of contact. For example, incipient slip may be indicated by that the grip starts to loosen. Ongoing slip may be indicated by a motion of the object because the grip starts to loosen. Loss of contact (e.g. the object fell off because the insufficient grip) maybe indicated by a reduced force, for example because of a relaxation of the deformable element. The received data may be indicative of the force that is applied to the soft sensor element or the deformable element, respectively. As mentioned above, each sensor of the at least one soft sensor elements may provide an electronic signal proportional to the magnetic field generated by the element and/or the position of the element with respect to the sensor. With respect to the processing means, this electronic signal may be referred to as the data being received by the processing means. The data may be digital or analog data and may correspond to a voltage or a current. In some examples, a Hall sensor may be used that provides a Hall voltage indicative of the magnetic field that the sensor experiences. Further, one or more analog-to-digital converter may be utilized as needed for converting the data between the sensor and the processing means. In the received data, the processing means may identify an indication that is indicative of a loosening grip or an object that is about to slip from the gripper's grip. Such situations of loosening grip or incipient slipping may be referred to as slip conditions, i.e. conditions in which the processing means shall output a warning, which allows to take measures for improving the grip. The warning may be put out to a control system, e.g. a control unit of a robotic gripper, such that the control system may perform a suitable countermeasure that improves the grip and avoids that the object may fall. The warning may be put out in form of binary signal. Further, the warning may be put out upon detection of a slip condition or the warning may correspond to a change in a status signal that is put out periodically. The status signal may, in some examples, be a binary signal that is put out periodically having status "o" indicating that the system is operating as desired. i.e. without any slip condition. Once a slip condition occurs, the status signal may change its status to "1" representing the warning and indicating the slip condition.

In the case of the robotic gripper mentioned above, the circumstances under which a slip condition may occur depend on the use case of the robotic gripper. The suitable countermeasures may also depend on these circumstances. In some examples, a suitable countermeasure may be to increase the grip, whereas when the robotic gripper is rotating an object, the suitable countermeasure may be to change the rotational motion (e.g. by reducing the speed or the acceleration of the rotation or using a different path for the object), thereby reducing forces acting on the object, like centrifugal forces.

As mentioned above, the data received by the processing means may have various forms. Some examples of data and how indications of loosening grip or incipient slip can be inferred from the data will be described below. Generally, it is possible to identify such indications from the unprocessed data provided by the sensor, e.g. the voltage provided by the sensor, or a processed signal, for example the force that is derived from the unprocessed data. Using the unprocessed data may expedite the identification, whereas in some examples, the precision of the detection may be improved when processed data is analyzed. In other words, the identification may be performed on the basis of unprocessed data as it is provided by the sensor, i.e. before any processing in forms of filtering or calculation of a force has been performed, or the identification may be performed on the basis of processed data, wherein the processing may include some kind of filtering (e.g. a band-pass filtering) or a calculation of the force from the data.

In some embodiments of the present invention, it may be beneficial to provide a spatial resolution of the applied forces by using a plurality of sensor elements. For achieving this, the plurality of soft sensor elements may be spatially distributed in a predetermined manner. In a preferred embodiment of the invention, the soft sensor elements of the plurality of soft sensor elements may form an array. For example, they may be arranged in a line. For example, the sensor array may have a spatial extend along a spatial direction, then the soft sensor elements may be arranged in a line parallel to this spatial direction. This allows for measuring how an applied force acts along the line defined by the plurality of soft sensor elements or how an applied force propagates along said line.

In another preferred embodiment of the invention, the soft sensors elements of the plurality of soft sensor elements are arranged in a grid. The grid may be a twodimensional grid. The grid may be a so-called regular grid with a structured topology. Such a regular grid may be formed by parallel and orthogonal lines, such as a cartesian grid in which crossing lines form a 90 degrees angle. In other regular grids, it may also be possible that crossing lines form other angles, as is for example the case in a hexagonal grid or a rhombic grid. Alternatively, the grid may be an irregular grid.

In a grid, the soft sensor elements may be arranged in a plane. Alternatively, the grid may be curved, e.g. convex or concave. It may also be possible that the soft sensor elements of the sensor array are arranged in a plane grid and may be foldable into a curved shape. In this case it can also be said that the grid spans or covers the surface onto which the sensor array is applied.

Compared to the aforementioned embodiment example, in which the plurality of soft sensor elements is arranged along a line, the grid-like arrangement allows to measure the distribution of the applied force or the propagation of the applied force along two spatial directions, namely the two spatial directions that are spanned by the grid. Similarly to spatially resolving a force measurement, a line or grid-like arrangement allows to spatially resolve slipping motions, thereby allowing to identify regions in which loose grip may occur earlier than in other regions. Also, more complicated arrangements may be used, which correspond to a three-dimensional configuration. For example, the sensor array may be configured on a curved surface. The curved surface may be convex or concave. One example is a spherical arrangement. For example, the sensor array may be arranged on the fingertip of a robotic gripper and may smoothly adjust to the shape of the fingertip, such that the deformable element forms an outer layer allowing to register forces of the grip of the gripper. The sensor arrangement may also be adapted to cover a surface of a glove at least partially. It may also be possible that a spherical or otherwise shaped sensor array may wrap an element, such that the element is located inside the wrapped surface, such that a motion of the enclosed element may exert a force on the deformable element.

In some preferred embodiments, the sensor of the at least one soft sensor element and the processing means are integrated in the same chip. Such an arrangement, for example, may improve the efficiency of the processing and the determining whether or not there is a slip condition, because the determination is performed on-chip and the latency is reduced. The latency may further be reduced in case that the warning is put out in form of a binary signal as mentioned above. If there is more than one soft sensor element, the sensors of the more than one soft sensor elements may be integrated in the same chip. Also, it may be possible that there are more than one processing means, each being integrated on the same chip with one of the sensors of the soft sensor elements.

In some other preferred embodiments, the processing means may be formed on a separate chip than the at least one soft sensor elements. If there are more than one soft sensor elements, this may allow to reduce the number of processing means that are necessary for receiving and processing data from the soft sensor elements, because one processing means may receive data from more than one of the soft sensor elements.

Further, if there is a plurality of soft sensor elements and a plurality of processing means, the principles of providing sensors of the soft sensor elements and the processing means on the same chip or separate chips may be combined. For example, the plurality of soft sensor elements may comprise a first set of soft sensor elements and a second set of soft sensor elements as well as a plurality of processing means. In this case, a first processing means may be integrated on the same chip with the sensors of the first plurality of soft sensor elements and a second processing means may be integrated on the same chip with the sensors of the second plurality of soft sensor elements.

In another preferred embodiment, the determining whether a slip condition is met may be based on detecting an oscillation in the received data. The inventors of the present invention have found that oscillations occur in the data provided from the sensors of the soft sensor elements right before the grip on an object begins to loosen up. This is due to the interaction between the object and the deformable element and the deformable element affecting the position of the element for reacting with the sensor, thereby also influencing the output of the sensor. Right before the grip on an object starts to loosen or in other words, right before the object will begin to move from its held tight position, the incipient movement is already felt by the deformable element. This incipient movement takes the form of a shaking or wobbling motion that causes the oscillation of the output data of the sensor.

Thereby, the amplitude of the oscillation will get larger the more loose the object will get. Eventually, when the grip on the object is so loose that the object will fall off, the amplitude is highest and the deformable element will start to relax once there is no more contact between the soft sensor element and the object.

The oscillation can either be detected in unprocessed data or in processed data. For example, the output data from the sensor can be monitored for oscillations directly (either on-chip or off-chip by another device or another processing means), which may have only a short latency since the output data is evaluated directly, or in other examples, the output data may be processed first, for example by calculating the applied force. In the latter case, the processed data, i.e. the derived force, will also undergo an oscillation, thereby allowing monitoring of the processed data.

The detection of the oscillation may go along with the amplitude of the oscillation exceeding a threshold, which will prevent that signal noise could lead to false indications of slip conditions.

Since it was observed that the material of the deformable element has an influence on the oscillations - e.g. on the latency of occurring oscillations because of the inertia of the material or on the amplitude -, the oscillations may occur in patterns that are specific for a particular material and/or a structure of the deformable element. For example, depending on the elasticity of the material, the periodicity of the oscillation may be longer or shorter. For example, the stiffer the deformable element, the higher the oscillation frequency. Accordingly, the output data may be evaluated by using pattern recognition. The pattern recognition may involve a library containing information about typical patterns indicative of oscillations for a set of usable deformable element materials.

In other preferred examples, the processing means maybe configured to determine the slip condition based on an applied force derived from the sensor output. In some examples, the processing means may be configured to calculate a force acting on the at least one soft sensor element from the received data and to determine a component of the force that is normal to a surface of the soft sensor element and a component of the force that is transversal to the surface of the soft sensor element. The component that is transversal to the surface of the soft sensor element may also be referred to as a shear force. Further, the determining whether a slip condition is met may comprise determining whether a ratio of the normal force component and the transversal force component exceeds a threshold. For example, a slip condition may be triggered in case that the transversal component, e.g. the shear force, exceeds a predetermined fraction of the normal force. The normal force component is directed in the direction normal to the surface of the soft sensor element, therefore, this component is highest, when the grip onto an object is highest. Similarly, when the grip begins to loosen and the object may begin to wobble, the shear force, or in other words the transversal component of the force, begins to increase. In this way, the force calculation may provide for an early detection of incipient loosening grip.

Irrespective of how the determination of the slip condition is actually performed, the determination may be based on a set of predetermined conditions that are indicative of the slip conditions such as loosening of a grip. The predetermined conditions may be stored in a storage of the processing means.

Alternatively, the determination may be based on a calibration. The calibration may be performed by calibrating the processing means with certain, predefined scenarios or by machine-learning. For example, any system may be trained based on training data in order to register conditions that involve an imminent fault of device, such as a gripper. Using machine-learning provides the benefit that the system may improve its operation during usage. Such a calibration may improve the operation of the system, because the material and/or the structure of the deformable element influence the determination of the slip conditions.

Alternatively or additionally, the system could also be configured to perform calibrations during operation and does not necessarily need to be pre-calibrated. For example, when the system detects oscillations, it may register the acting forces - particularly the normal and transversal components -, may derive a ratio of the acting forces and may set the ratio as a threshold for any slip condition determination that is based on the force calculation.

Further, the determination whether a slip condition occurs may be performed in subsequent steps. For example, in a first step, a determination maybe performed by the first processing means of the system. This determination may only involve computational steps that do not take much computational power and may therefore be performed fast with minimal latency. The corresponding processing means may put out an indication to a second processing means that will perform a subsequent determination based on the indication and either the data received from the sensor or data forwarded by the first processing means. For example, the first processing means may perform an evaluation of raw data that is provided by one or more sensors, e.g. voltage or current data as explained above. The second processing means may perform calculations on the basis of data received from one or more sensors that may include a force determination. Further, the second processing means may receive additional information from other monitoring systems, e.g. motion sensors, acceleration sensors, visual sensors, etc. This information may not only be used for improving the determination of a slip condition but may also be used to determine a suitable countermeasure. For example, the second processing means may use information from monitoring systems to determine the state of a gripped object (e.g. the object is rotated by a robotic gripper) and may determine a suitable countermeasure (e.g. reduce the speed or acceleration of the rotation). The first processing means may be implemented on the same chip as the sensor of the at least one soft sensor element as was mentioned above. The second processing means may be a processing means of a computer or a control unit and may have more computational power. This way, the first processing means may indicate a warning to the second processing means that will check the data and the occurrence of a slip condition. Because of the higher computational power, the second processing means may perform the determination with higher accuracy. In case such a two-step determination is performed, it is generally preferred that the first processing means provides a fast result of the determination, such that a fast reaction to incipient slip can already be performed while the second processing means performs the second, more accurate determination, which may be used for identifying false positive results in the sense that the first processing means triggered a warning even though there was no incipient slip. Thereby, the fast reaction triggered by the first processing means may use a countermeasure that is machine-learned or preconfigured, whereas the second processing means may determine a countermeasure based on additional information, e.g. information provided by monitoring systems as mentioned above.

Further, the abovementioned need is also addressed by a method according to the present invention. The method comprises providing at least one soft sensor element and a processing means. Each of the at least one soft sensor elements comprises a sensor, a deformable element, which is deformable by a force, and at least one element for reacting with the sensor to produce data indicative of the applied force by a deformation of the deformable element. The deformable element extends at least partially between the sensor and the at least one element. The at least one soft sensor element and the processing means may be similar or identical to the soft sensor element and the processing means that are described above with respect to any embodiment example of the system according to the invention.

Further, the method comprises receiving the data from one or more of the soft sensor elements and determining that a slip condition is met based on the received data. These steps are performed by the processing means. Further, the method may comprise outputting a warning. The warning is based on the determination that a slip condition is met and may be put out by the processing means directly or may be put out by another component, such as a dedicated alarm server.

In a preferred embodiment, the determining that the slip condition is met may be based on detecting an oscillation in the received data. As mentioned with respect to the system according to the invention, incipient loose of grip may cause oscillations in the data provided by the sensor of the one or more soft sensor elements. These oscillations may be registered in order to provide for an early detection of the loosening grip.

The detecting the oscillation may be performed by one or more of several mathematical operations. For example, the detecting the oscillation may comprise at least one of calculating a derivative of the signal, performing a Fast Fourier Transformation (FFT), detecting a number of zero-crossings within a predetermined time period and determining whether the number of zero-crossings exceeds a threshold for the number of zero-crossings, calculating a variance of the signal and determining whether the variance exceeds a threshold for the variance, or calculating a root-mean-square (RMS) value and determining whether the RMS value exceeds a threshold for the RMS value.

All the abovementioned mathematical operations may indicate changes in the data provided by the or more sensors of the one or more soft sensor elements and may therefore be indicative of conditions of incipient loose of grip. The respective thresholds may be predetermined thresholds or may be determined by machine-learning. Further, the person skilled in the art will be aware that best results may be achieved when real-time monitoring and analysis is performed. Therefore, it is preferred to perform real-time analysis such as live FFT or to perform the analysis on subsequent time intervals. Furthermore, it needs to be noted that the monitoring needs to be performed at a high rate (e.g. 1 kHz) because the oscillations occur at a high rate as well (e.g. in the range of 5 to 200 Hz).

In another preferred embodiment, the detecting of the oscillation may comprise applying a band-pass filter to the received data, applying a Fast Fourier Transformation to the band-pass filtered data for determining harmonics of the received data and checking whether amplitudes at certain frequencies exceed a threshold. These certain frequencies may be indicative of a movement of a gripped object and may therefore indicate loosening grip. These certain frequencies may be predetermined or may be machine-learned.

In another preferred embodiment, the method may determine the slip condition based on a calculated force acting on the at least one soft sensor element. In this regard, the method may comprise calculating a force acting on the at least one soft sensor element based on the received data and determining a normal force and a shear force. The determining that the slip condition is met may be based on a ratio of a value of the normal force and a value of the shear force. For example, the ratio of the shear force and the normal force may exceed a threshold. The determination of the slip condition on the basis of a force ratio may be performed on the basis of a preconfigured or machine-learned threshold for the ratio. Additionally or alternatively, the threshold may be set on the basis of an encountered oscillation that was detected. For example, when the system registers oscillations, the acting forces may be calculated and a ratio of the forces may be determined and set as a threshold for the detection of a slip condition. Thereby, the oscillation-based and force-based determinations may be combined and the system may be configured during operation, which reduces the necessity for pre-configurations or allows the system to adapt to different use cases. For example, an encountered oscillation that is detected by an oscillation-based determination may allow to derive a threshold for the force-based determination and thereby train the force-based determination.

The abovementioned preferred embodiments are not exclusive. Instead, combinations of two or more aspects of the abovementioned preferred embodiments lie within the scope of the invention. As such, all the aforementioned aspects or embodiments are combinable. In particular, different monitoring procedures may be performed simultaneously or subsequently. For example, force-based and oscillation-based analysis may be performed on the same data at the same time by different processing means.

### BRIEF DESCRIPTION OF THE DRAWINGS

The following description and the annexed figures set forth in detail certain illustrative aspects of the soft sensor arrangement, the gripper, and the respective two methods described above. These aspects are indicative, however, of but a few of the various ways in which the principles of various embodiments can be employed and the described embodiments are intended to include all such aspects and their equivalent.

In the figures, like reference characters generally refer to the same parts throughout the different figures. The figures are not necessarily to scale. Instead, a general focus is put on an explanation of the universal principles of the invention.

In the following description, various embodiments of the invention are described with reference to the following figures:
- FIG. 1: shows a section view of an embodiment example of a soft sensor element according to the invention, in the status that is depicted in the figure, no external force is applied to the soft sensor element;
- FIG. 2: shows the section view of the soft sensor element of FIG. 1 with a linear external force applied;
- FIG. 3: shows the section view of the soft sensor element of FIG. 1 with a non-linear external force applied;
- FIG. 4: shows oscillations in (a) unprocessed and (b) processed data provided by a sensor of a soft sensor element as described in any of figures 1 to 3;
- FIG. 5: shows a flow diagram of a method according to an embodiment example of the invention in which oscillations in the data provided by the sensor are detected in order to detect a slip condition;
- FIG. 6: shows a flow diagram of a method according to an embodiment example of the invention in which normal components and transversal components of the applied force are evaluated in order to detect a slip condition; and
- FIG. 7: shows oscillations in (a) unprocessed and (b) processed data provided by a sensor of a soft sensor element as described in any of figures 1 to 3, with indicated zero-crossings.

### DETAILED DESCRIPTION

The following detailed description refers to the accompanying figures that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

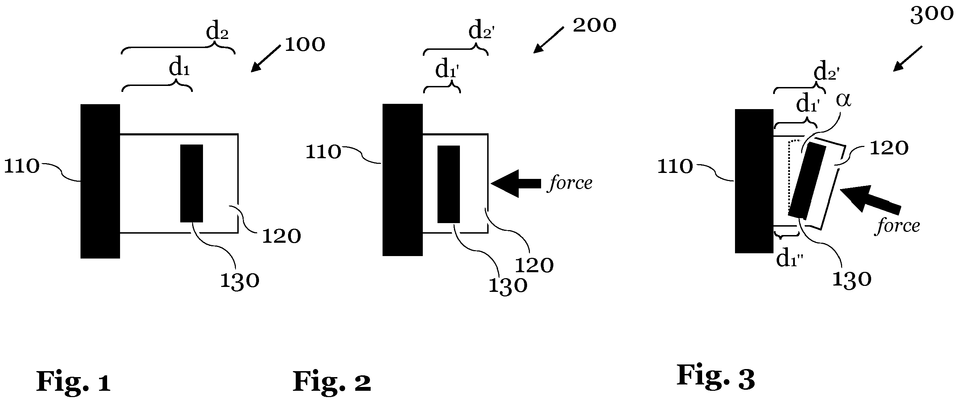

Figure 1 depicts a section view of a soft sensor element 100 according to an embodiment example of the invention. The soft sensor element 100 comprises a sensor 110, a deformable element 120, and an element 130 for reacting with the sensor 110. For example, the deformable element 120 may comprise at least one of an elastomer, a polymer, a rubber and a vulcanizate. The deformable element 120 may also comprise a flexible element, an elastic element or a flexible structure. The flexible element or the flexible structure may be made of metal. For example, the flexible element or the flexible structure may be a made of metallic flexible beams. In the here shown embodiment example, the element 130 is fully embedded in the deformable element 120. Fully embedded means that the deformable element 120 is completely surrounding the element 130, which means all surfaces of the element 130 are in contact with the deformable element 120. It can also be said that the element 130 is enveloped by the material of the deformable element 120. The deformable element 120 is deformable by applying an external force. The applied external force may cause the deformable element 120 to be compressed such that the distance between the element 130 and the sensor 110 changes. This change in distance can be detected by the sensor 110. For example, if the element 130 is a magnet and the sensor 110 is a magnetic sensor, then the reduction in distance between the element 130 and the sensor 110 causes the sensor to detect a different magnetic field, e.g. a different magnetic field strength and/or orientation as compared to before the deformation. Hence, from a change in the measured physical unit, it can be deducted how much the deformable element 120 is deformed. The person skilled in the art will however notice that also other types of sensor 110/element 130 combinations can be used for measuring the amount of distance the deformable element 120 has been compressed.

Each individual deformation of the deformable element 120 corresponds to a different applied external force, which in turn is associated with a respective physical measurement obtained by the sensor 110. Hence, a correlation between applied external force values and corresponding measurement values of the sensor 110 exists. This correlation can be determined during an initial calibration step of the sensor 110 or can be predetermined by knowing the bulk modulus and/or a shear modulus of the deformable element 120. The correlation itself can, for instance, be established as a look-up table including external force values and their associated sensor readings. The correlation between applied external force values and corresponding measurement values of the sensor 110 could be established using a model trained by machine learning. A person skilled in the art also knows other ways to establish the respective correlations, all of which are encompassed hereby. Once an actual measurement of the sensor 110 is obtained, the look-up table can be used to infer an estimate for the external force. However, by knowing the bulk modulus and/or the shear modulus of the deformable element 120 also an algorithm can be used, which outputs the actual force applied in respect to the amount of deformation by ease of calculation. The algorithm may be a non-linear model, which defines the actual force as a non-linear function of the measurement values of the sensor 110. The algorithm or the correlation may be implemented inside an integrated circuit (IC) containing the sensor 110, or outside the integrated circuit containing the sensor 110, or partially inside the integrated circuit containing the sensor 110 (e.g. for calculating the position of the element 130 from the sensor signal), and partially outside the integrated circuit containing the sensor 110 (e.g. for inferring the force from the displacement of the element 130). The sensor 110 may be configured to provide dual sensing, which allows detection of linear forces as well as shear forces, for example a linear force in the direction of the external force and shear forces in one direction or two orthogonal directions in the plane perpendicular to the direction of the external force. The correlation or the algorithm may provide a direct link between the applied external force values and the measurement values of the sensor 110. Optionally, the correlation or the algorithm may compute the displacement of the element 130 as an intermediate step. In this case, a first correlation or a first algorithm determines the position of the element 130 from the measurement values of the sensor 110, and a second correlation or a second algorithm determines the applied external force value from the position of the element 130. Thus, in this case, the determining the position of the element 130 acts as an intermediate step.

The element 130 embedded within the deformable element 120 has in the here shown embodiment example a distance, d₁, from the sensor 110, which is smaller than the distance, d₂, of the second end of the deformable element 120 from the sensor 110.

In a not limiting sense, the distance, d₁, of the element 130 from the sensor 110 may be 3mm, the distance, d₂, of the second end of the deformable element 120 from the sensor may be 4mm A person skilled in the art knows that these dimensions are only named for illustrative purposes and shall not be understood to be limiting if not explicitly mentioned.

Figure 2 shows a section view of the soft sensor element 200 of Figure 1 with an applied external force. The applied external force can be uniform, i.e., constant over a surface of application of the force. However, the applied external force can also be non-uniform, i.e., varying over the surface of application of the force. This variation of the force over the surface of application may be linear or non-linear. In other words, each point on the surface of application of the force may be assigned a different force value, which is related to the neighboring force values according to a linear or a non-linear relationship. In the shown example, the external force is uniform over the surface of the deformable element 120 and applied perpendicularly to the surface of the sensor 110. The applied external force compresses the deformable element 120. This causes the distance, d₂, of the second end of the deformable element with respect to the sensor 110 to be reduced to a shorter distance, d₂^{,}. Due to the fact that the element 130 is embedded in the deformable element 120 also the distance, d₁, of the element 130 to the sensor 110 is reduced to a shorter distance, d₁^{,}.

The sensor 110 is configured to detect the change of distance, d₁ to d₁^{,}_{,} by reacting with the element 130. If the sensor 110 is a magnetic sensor and the element 130 is a magnet, then the lower distance between the sensor 110 and the element 130 causes the sensor 110 to detect a higher magnetic field strength, since it is proportional to the distance. The change in magnetic field strength as such allows to conclude the force applied to the deformable element 120. In some cases, if the sensor 110 is a magnetic sensor, it is possible that the sensor 110 detects, additionally or alternatively to the magnetic field strength, a change of orientation of the magnetic field strength vector, i.e., of one or more angles assigned to the magnetic field vector. In this case, the magnetic sensor may be located at an offset with respect to the axis of the magnet. Whereas here only a one-dimensional distance measurement and as such a perpendicularly applied force is described, the person skilled in the art will notice that the element 130 may also be inclined at an angle as shown in Figure 2b.

In Figure 3, the external force is applied uniformly but not perpendicular to the surface of the sensor 110. Hence, the applied external force deforms the deformable element 120 in a direction not perpendicular to the surface of the sensor 110. This causes the distance, d₁, of the element 130 to the sensor 110 to be changed in a nonhomogeneous way. For example, the upper end of the element 130 is moved to a larger distance, d₁^{,}, but the lower end of the element 130 is moved to a lower distance, d1^{,,}. Since the distances d₁^{,} and d₁^{,,} are different if a non-linear force is applied, the element 130 is tilted by a non-zero angle α with respect to the sensor 110. Thus, with a non-perpendicular external force the element 130 is not only translated, but also rotated. The sensor 110 is adapted to detect the change of the angle α by the reaction with the element 130. If the sensor 110 is a magnetic sensor and the element 130 is a magnet, the different angle α between the sensor 110 and the element 130 causes the sensor 110 to detect a different magnetic field, since the orientation of the magnetic field lines of the magnet 130 has been changed with respect to the sensor 110. It could also be said that the rotation of the element 130 by the angle α causes the sensor 110 to perceive a rotated three-dimensional magnetic field from the element 130. Under rotations, the absolute magnetic field strength does not change but the orientation of the magnetic field vector in space is changed. Hence, the sensor 110 perceives different magnetic fluxes as compared to no rotation of the element 130, since the projections of the magnetic field vector onto the surfaces, over which the sensor 110 measures the magnetic fluxes, are different. The change in the measured magnetic fluxes allows to infer the change of the position of the element 130. The positional change of the element 130 is uniquely linked to the force exerted onto the deformable element 120. Hence, if a non-perpendicular force is applied to the deformable element 120, a rotation of the element 130 could be used to determine the force applied to the deformable element 120.

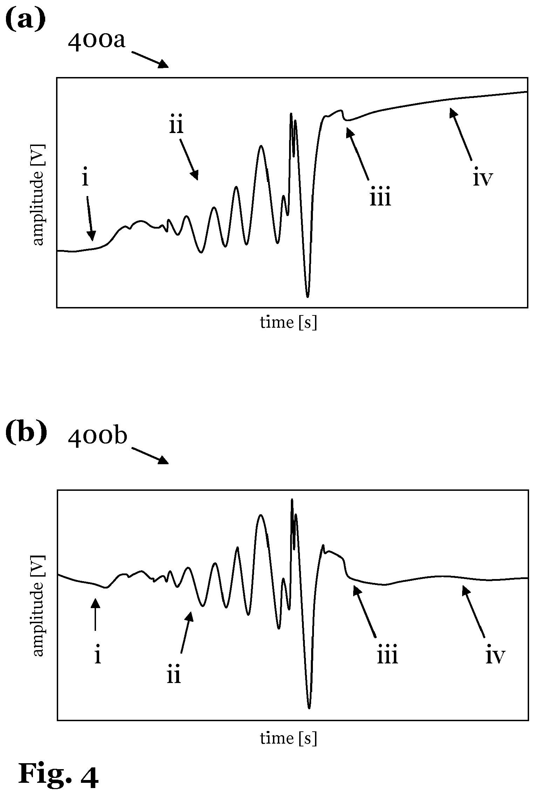

Figure 4 shows oscillations in (a) unprocessed and (b) processed data provided by a sensor of a soft sensor element as described in any of figures 1 to 3.

In Figure 4 (a), an example 400a of unprocessed data as provided by the sensor of one of the soft sensor elements, which may also be referred to as raw data, is illustrated. In the example depicted in the figure, the voltage registered at the sensor is illustrated, wherein the amplitude in Volt [V] is plotted against the time in seconds [s]. Since the figure is used for illustrative purposes only, no concrete values are presented. Furthermore, also that the y-axis is presented in units of Volts is only exemplarily and shall not be understood to be limiting. All values indicative of the motion of the element (130) may experience oscillations and may therefore be used for slip detection.

As can be seen in figure 4 (a), the data has an initial level (i), which may be indicative of the force with which a gripper grips an object. Right before the grip on the object starts to loosen, little movements of the object cause little deformations of the deformable object that lead to oscillations (ii). The looser the grip gets, the larger will the amplitude of the oscillation be. At (iii) the grip gets too loose and the object falls off. Subsequently, the deformable element will relax (iv) because there is no contact between the object and the deformable element anymore.

Similarly to the unprocessed data, oscillations are also shown in band-pass filtered data that is exemplarily depicted in figure 4 (b) at 400b. Here, (i) to (iv) illustrate the same conditions of (i) initial state, (ii) oscillations, (iii) loose grip and (iv) relaxation. Because of the band-pass filter, there is no drift in the data and the oscillation may be more easily identified.

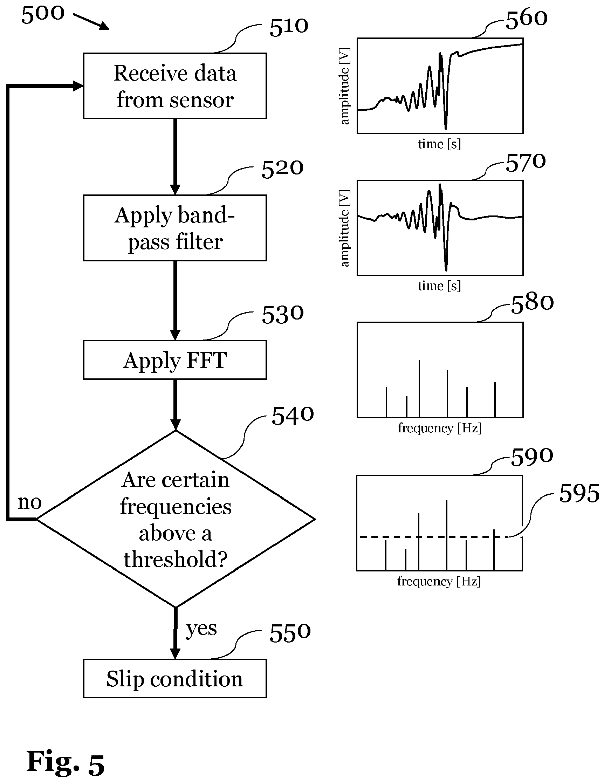

Figure 5 shows a flow diagram of a method according to an embodiment example of the invention in which oscillations in the data provided by the sensor are detected in order to register a slip condition. The method may be performed by a system according to the invention with at least one soft sensor element as was described with respect to figures 1 to 3 and a processing means.

Figure 5 illustrates a method 500, which starts at 510 with receiving data from a sensor. A representation of the received data may be similar to the example depicted in figure 4 (a) that is reproduced in box 560. Afterwards at 520, the received data is processed by applying a band-pass filter to the received data. The band-pass filtered data may be similar to the filtered data depicted in figure 4 (b) that is reproduced in box 570.

In order to detect oscillations in the filtered data, a suitable analysis is started. In the example depicted in figure 5, this is done by the application of a Fast Fourier Transform that allows to analyze the frequency spectrum of the filtered data. Box 580 illustrates the transformed data in the frequency domain.

Upon analyzing the frequency spectrum, it is checked, at 540, whether certain frequencies exceed a threshold, as is illustrated in box 590, wherein the threshold is illustrated as line 595. Which frequencies will be analyzed maybe specified in a predetermined instruction, which may be the result of tests performed by the manufacturer of the system. However, it is also possible that machine-learning is applied for determining rules for detecting oscillations in the frequency domain. Machine-learning may also be applied in order to update predefined instructions. The certain frequencies that are analyzed may depend on the material of the deformable element, because the pattern of the oscillations and therefore the frequencies may be material-specific. Further, even though the threshold 590 is illustrated as a single line indicating a threshold that applies to all frequencies, it is also possible to specify an individual threshold for each frequency of the certain frequencies. Further, since losses and imperfections affect any real-world system, it is also mentioned that each frequency that is to be evaluated may be defined as a frequency range.

If no oscillations are detected - or in the context of the embodiment example of figure 5, if the certain frequencies do not exceed the threshold - the method may continue to receive data from the sensor and rerun the analysis based on the newly received data. In this regards, it needs to be noted that in preferred embodiments of the present invention, the system will monitor the received data and perform the analysis on data that is received in real time or in time intervals. The time intervals may at least partially overlap or may be consecutive. Consistently monitoring the received data and rerunning the analysis in real time or for each of a set of overlapping or consecutive time intervals allows to provide time resolution and early detection of changes in the status of the system (e.g. early detection of incipient grip lost).

If oscillations are detected at 540, a slip condition is met and the system indicates that a slip condition has met at 550 - either by directly putting out a warning itself or by providing an indication to another device that the slip condition is met so that the other device can put out a corresponding warning.

Based on the disclosure of the invention above, the person skilled in the art will be aware that there are several options that allow to detect oscillations. Applying an FFT is one example. Further, calculating a derivative of the signal, detecting a number of zero-crossings within a predetermined time period and determining whether the number of zero-crossings exceeds a threshold for the number of zero-crossings, calculating a variance of the signal and determining whether the variance exceeds a threshold for the variance, or calculating a root-mean-square (RMS) value and determining whether the RMS value exceeds a threshold for the RMS value would also be suitable options. In figure 5, application of an FFT is illustrated as one example.

Steps 510, 520, 530 and 540 may be performed by a processing means according to the present invention. At 550, the processing means may put out the warning itself or may provide an indication to a dedicated alarm server that will put out a corresponding warning. The warning may address a control means that can initiate suitable means for reacting to the warning, e.g. by improving the grip by increasing the force with which the gripper grips the object.

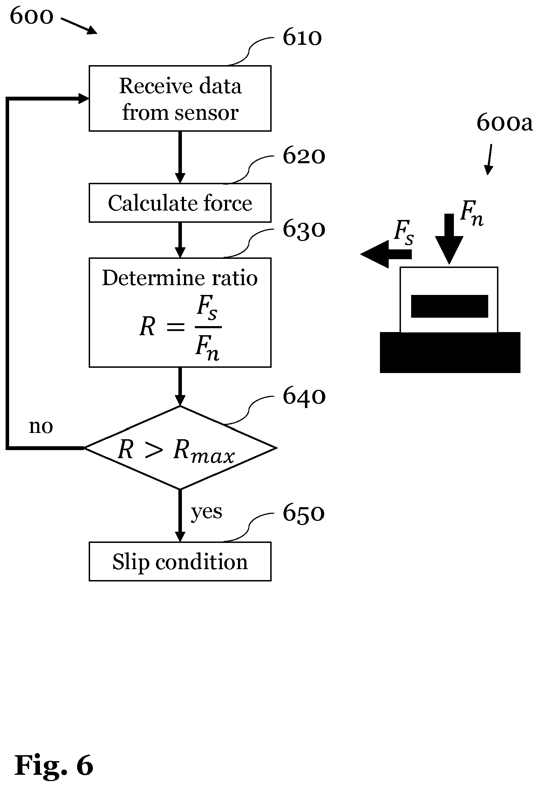

Figure 6 shows a flow diagram of a method according to an embodiment example of the invention in which normal components and transversal components of the applied force are evaluated in order to register a slip condition. Similarly to the method described in figure 5, the method depicted in figure 6 may be performed by a system according to the invention with at least one soft sensor element as was described with respect to figures 1 to 3 and a processing means.

Figure 6 illustrates a method 600, which starts at 610 with receiving data from a sensor. From the received data, a force that is applied onto the soft sensor element is determined at 620. The applied force is separated into components, namely a normal component *Fₙ*, which is directed along the normal direction of a surface of the soft sensor element, and a transversal component, which may also be referred to as shear force *F_{S}.* The directions of the components are illustrated in the illustration 600a depicted in figure 6. From both components, a ratio *R*=*Fₛ*/*Fₙ* is determined that indicates how strong the influence of the shear force will be compared relatively to the normal force. For example, if the ratio is high, there is a higher chance that a gripped object will move or slip from the grip.

At 640, it is checked whether the ratio *R*=*Fₛ*/*Fₙ* exceeds a threshold *Rₘₐₓ*. The threshold may also be referred to as a maximum ratio and may be predetermined by a manufacturer or may be machine-learned.

If the ratio does not exceed the threshold, the method may continue again at 610 with receiving further data form the sensor. Similarly to method 500 illustrated in figure 5, data may be continuously received and monitored and processed in real time or according to time intervals.

If the ratio exceeds the threshold, it is determined that the gripped object will likely slip and a warning is put out. Similarly to what was described with respect to method 500 in figure 5, the warning may be put out directly by the processing means itself or may be indicated to another device that may put out a warning.

As mentioned above, the threshold for the force-based determination may be derived from the detection of an oscillation. This may, for example, allow a system to combine the methods of figures 5 and 6, wherein the method of figure 6 may be re-calibrated when the method of figure 5 detects a slip condition.

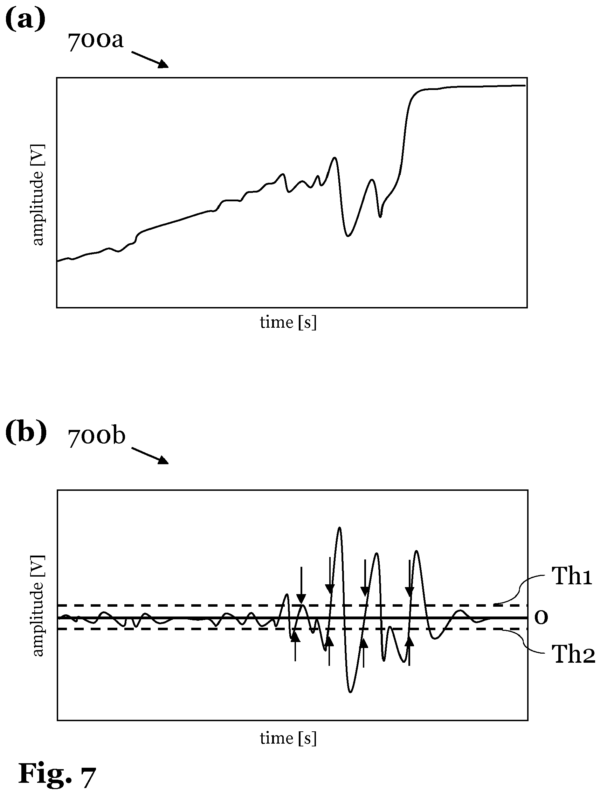

Figure 7 shows oscillations in (a) unprocessed and (b) processed data provided by a sensor of a soft sensor element as described in any of figures 1 to 3, with indicated zero-crossings in the processed data.

In Figure 7 (a), an example 700a of unprocessed data as provided by the sensor of one of the soft sensor elements, which may also be referred to as raw data, is illustrated. In the example depicted in the figure, the voltage registered at the sensor is illustrated, wherein the amplitude in Volt [V] is plotted against the time in seconds [s]. Similarly to figure 4, the figure is for illustrative purposes only and no values are presented.

In Figure 7 (b), bandpass processed data is illustrated. The bandpass processed data is analyzed based on the zero-crossings of the data. As is illustrated in figure 7 (b), a zero value and two thresholds Thi and Th2 located equidistantly at either side of zero are illustrated. The arrows indicate locations in which both thresholds are exceeded shortly after one another, indicating a rapidly changing signal that crosses zero. By using two thresholds Thi, Th2, noise can be cancelled out. Optionally, a time limit may be implemented to reduce the occurrence of false positives. For example, the second threshold Th2 must be exceeded within a predetermined time limit after the first threshold Thi was exceeded or vice versa. A slip condition maybe determined when a number of zero-crossings are detected. A time window may be set during which number of zero-crossings needs to be registered in order to indicate a slip condition.

The detection of zero-crossings may be a particular example of the oscillation detection depicted in figure 4 and may represent an alternative or an addition to the detection of oscillations on the basis of Fourier transformations in the method according to figure 5.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the spirit and scope of the appended claims.

## Claims

1. A system comprising:
at least one soft sensor element (100, 200, 300), wherein each of the at least one soft sensor elements (100, 200, 300) comprises:
a sensor (110);
a deformable element (120), wherein the deformable element (120) is deformable by the force (F); and
at least one element (130) for reacting with the sensor (110) to produce data indicative of the applied force by a deformation of the deformable element (120), wherein the deformable element (120) extends at least partially between the sensor (110) and the at least one element (130); and
a processing means, wherein the processing means is configured to:
receive data from the at least one the soft sensor element (100, 200, 300); and
determine whether a slip condition is met based on the received data.

2. The system according to claim 1, wherein the at least one element (130) is embedded into the deformable element (120).

3. The system according to any of the preceding claims, wherein the at least one soft sensor element (100, 200, 300) comprises a plurality of soft sensor elements and wherein the plurality of soft sensor elements forms an array.

4. The system according to any of the preceding claims, wherein the soft sensor elements of the plurality of soft sensor elements are arranged in a line or in a grid.

5. The system according to claims 1 to 4, wherein the sensor (110) of the at least one soft sensor element and the processing means are integrated in the same chip.

6. The system according to any of claims 1 to 4, wherein the processing means is formed on a separate chip than the at least one soft sensor elements (100, 200, 300).

7. The system according to any of the preceding claims, wherein the determining whether a slip condition is met is based on detecting an oscillation in the received data.

8. The system according to claim 7, wherein the processing means is configured for detecting an oscillation in the received data based on one or more oscillation patterns that are specific for a material of the deformable element and/or a structure of the deformable element.

9. The system according to any of claims 1 to 6, the processing means being further configured to:
calculate a force acting on the at least one soft sensor element (100, 200, 300) from the received data, and
determine a component of the force that is normal to a surface of the soft sensor element (100, 200, 300) and a component of the force that is transversal to the surface of the soft sensor element (100, 200,300); and
wherein the determining a slip condition comprises determining whether a ratio (R) of a value of the transversal force (Fₛ) and a value of the normal force (Fₙ) exceeds a threshold.

10. The system according to any of the preceding claims, wherein the deformable element (120) is made out of at last one of an elastomer, a polymer, a rubber and a vulcanizate.

11. A method comprising:
providing at least one soft sensor element (100, 200, 300) and a processing means, wherein each of the at least one soft sensor elements (100, 200, 300) comprise:
a sensor (110);
a deformable element (120), wherein the deformable element (120) is deformable by a force; and
at least one element (130) for reacting with the sensor (110) to produce data indicative of the applied force by a deformation of the deformable element (120), wherein the deformable element (120) extends at least partially between the sensor (110) and the at least one element (130);
receiving (510, 610), by the processing means, the data from one or more of the soft sensor elements (100, 200, 300);
determining (550, 650), by the processing means, that a slip condition is met based on the received data; and
outputting a warning.

12. The method according to claim 11, wherein the determining that the slip condition is met is based on detecting an oscillation in the received data.

13. The method according to claim 12, wherein the detecting an oscillation comprises at least one of:
calculating a derivative of the signal,
performing a Fast Fourier Transformation, FFT,
detecting a number of zero-crossings within a predetermined time period and determining whether the number of zero-crossings exceeds a threshold for the number of zero-crossings,
calculating a variance of the signal and determining whether the variance exceeds a threshold for the variance, or
calculating a root-mean-square, RMS, value and determining whether the RMS value exceeds a threshold for the RMS value.

14. The method according to claim 12, wherein the detecting of the oscillation comprises:
applying (520) a band-pass filter to the received data;
applying (530) a Fast Fourier Transformation, FFT, to the band-pass filtered data for determining harmonics of the received data; and
checking (540) whether amplitudes at certain frequencies exceed a threshold.

15. The method according to claim 11, further comprising:
calculating (620), by the processing means, a force acting on the at least one soft sensor element (100, 200, 300) based on the received data;
determining (630), by the processing means, a normal force (Fₙ) and a transversal force (Fₛ); and
wherein determining that the slip condition is met is based on a ratio (R) of a value of the transversal force (Fₛ) and a value of the normal force (Fₙ).
